(19) Europäisches Patentamt
European Patent Office
Office européen des brevets

(11) Numéro de publication: **0 095 973**
**B1**

# (12) FASCICULE DE BREVET EUROPEEN

(45) Date de publication du fascicule du brevet: **28.01.87**

(21) Numéro de dépôt: **83401027.4**

(22) Date de dépôt: **24.05.83**

(51) Int. Cl.⁴: **G 02 F 1/17**, H 01 M 4/60, H 01 M 10/36, C 25 B 3/10

(54) **Dispositif électrochromique pouvant servir au stockage d'énergie, et système d'affichage électrochromique.**

(30) Priorité: **01.06.82 FR 8209513**

(43) Date de publication de la demande: **07.12.83 Bulletin 83/49**

(45) Mention de la délivrance du brevet: **28.01.87 Bulletin 87/5**

(84) Etats contractants désignés: **DE GB IT NL**

(56) Documents cités:
**EP - A - 0 027 855**
**EP - A - 0 032 991**
**EP - A - 0 036 118**
**WO - A - 83/02368**
**FR - A - 94 536**

**EXTENDED ABSTRACTS, vol. 80-1, 11-16 mai 1980, SPRING MEETING, abrégé no. 427, pages 1061-1062, Princeton, USA. A. F. DIAZ et al.: "Electrosynthesis and study of conducting organic polymers for electrode applications"**
**IBM TECHNICAL DISCLOSURE BULLETIN, vol. 24, no. 11A, avril 1982, page 5755, New York, USA. A: F. DIAZ et al.: "Poly-p-nitrophenylpyrrole films as electrodes for batteries"**
**CHEMICAL ABSTRACTS, vol. 93, no. 6, 11 août 1980,**

(73) Titulaire: **THOMSON-CSF, 173, Boulevard Haussmann, F-75379 Paris Cedex 08 (FR)**

(72) Inventeur: **Dubois, Jean-Claude, THOMSON-CSF SCPI 173, bld Haussmann, F-75379 Paris Cedex 08 (FR)**
Inventeur: **Tourillon, Gérard, THOMSON-CSF SCPI 173, bld Haussmann, F-75379 Paris Cedex 08 (FR)**
Inventeur: **Garnier, Francis, THOMSON-CSF SCPI 173, bld Haussmann, F-75379 Paris Cedex 08 (FR)**

(74) Mandataire: **Lepercque, Jean et al, THOMSON-CSF SCPI 19, avenue de Messine, F-75008 Paris (FR)**

(56) Documents cités: (suite)
**page 664, no. 56812d, Columbus, Ohio, USA. A. F. DIAZ et al.: "Chemical modification of a polypyrrole electrode surface"**
**JOURNAL OF THE ELECTROCHEMICAL SOCIETY, vol. 129, no. 5, mai 1982, pages 1009-1015, Manchester, New Hampshire, USA. R. A. BULL et al.: "Polymer films on electrodes"**

EP 0 095 973 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention concerne des dispositifs électroniques et notamment leur application au stockage d'énergie, sous la forme de batteries ou de piles, comportant des électrodes obtenues par polymérisation électrochimique d'un monomère hétérocyclique sur un support électriquement conducteur.

Le stockage d'énergie s'effectue généralement à l'aide de batteries d'accumulateurs dont le nombre de cycles charge-décharge est limité et l'encombrement important, ou de piles dont l'encombrement est faible mais qui ne sont pas rechargeables. Il apparaît donc difficile de disposer de dispositifs de stockage d'énergie qui soient à la fois d'un encombrement réduit, recyclables et fiables dans l'utilisation prolongée. Or, il existe un besoin grandissant de dispositifs permettant d'assurer une alimentation de secours à des systèmes électriques ou électroniques particulièrement sensibles à des interruptions, même très brèves, de leur alimentation, dues par exemple à des coupures de courant. C'est le cas notamment du matériel utilisé dans le domaine informatique ou des organes constituant les centraux téléphoniques afin d'assurer la conservation des données mises en mémoire.

Afin de satisfaire à cette demande, on a cherché à obtenir des dispositifs pouvant stocker une grande énergie par unité de poids et acceptant un nombre élevé de cycles charge-décharge. Ces dispositifs sont basés sur les propriétés de certains polymères rendus électriquement conducteurs à l'aide de dopants et pouvant ainsi être utilisés pour confectionner des électrodes de batteries. Ces matériaux polymères dopés par des anions ou des cations possèdent la propriété de modifier leur couleur suivant leur état électrochimique. On peut donc les utiliser dans des cellules de visualisation électrochimiques comme mentionné dans la demande de brevet européen EP-A-0 027 855 où un dispositif électrochimique comporte une électrode comprenant un film de polymère sur un support conducteur, ce film pouvant être obtenu par polymérisation électrochimique d'un monomère de pyrrole substitué. Les avantages des batteries comportant des éléments actifs en polymère sont une grande énergie stockée par unité de poids, environ deux fois plus que les batteries classiques au plomb, et un nombre élevé de cycles charge-décharge. On a ainsi réalisé des batteries utilisant des polymères de base comme le polyacétylène, le polyphénylène et le polysulfure de phénylène. Cependant, ces polymères présentent un grave inconvénient qui est une forte sensibilité à l'oxygène. L'action de l'oxygène provoque à la longue une dégradation et une rupture des chaînes du polymère. Par ailleurs, dans le cas notamment du polyacétylène, on est contraint de choisir pour confectionner l'électrolyte un solvant qui résiste à l'électrolyse lors de la charge.

Afin de pallier ces inconvénients, l'invention due, d'une part à MM. F. GARNIER et G. TOURILLON du Laboratoire de Photochimie Solaire du C.N.R.S. et à M. J.-C. DUBOIS de THOMSON-CSF d'autre part, propose des batteries utilisant des électrodes constituées de polymères conducteurs obtenus par polymérisation électrochimique de composés hétérocycliques substitués. Ces nouveaux polymères conducteurs permettent d'obtenir des dispositifs électrochimiques de stockage d'énergie possédant une durée de vie améliorée par rapport aux batteries existantes ainsi qu'une grande stabilité des matériaux constituant les électrodes.

L'invention a donc pour objet un dispositif électrochimique comprenant une cellule contenant un électrolyte en suspension dans un solvant et au moins une première et une seconde électrode en contact avec ledit électrolyte, au moins la première électrode comprenant un film de polymère sur un support conducteur, ledit film étant obtenu par polymérisation électrochimique d'au moins un monomère M, ledit polymère répondant à la formule générale $(M^+ X^-y)n$ où $X^-$ représente un anion provenant de l'électrolyte utilisé au cours de ladite polymérisation, y la proportion en anion rapportée à une mole de monomère et n le degré de polymérisation, caractérisé en ce que ledit monomère est:

– soit un hétérocycle substitué par au moins l'un des groupements $R_1$ et $R_2$, de formule générale:

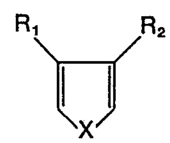

avec

X = S ou O,

$R_1$ et $R_2$ étant des groupements de type alkyle, alkoxyle, hydroxyle, aryle, aryle substitué, halogène, trihalogénométhyle, cyano, amino ou dialkylamino;

– soit un indole substitué sur le noyau phényle par au moins l'un des groupements $R_3$, $R_4$, $R_5$ et $R_6$, de formule générale:

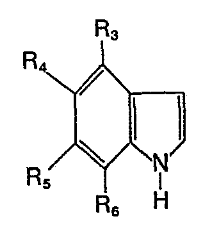

$R_3$, $R_4$, $R_5$ et $R_6$ étant des groupements de type alkyle, alkoxyle, hydroxyle, aryle, aryle substitué, halogène, trihalogénométhyle, cyano, amino ou dialkylamino.

L'invention a également pour objet un dispositif servant à l'accumulation et à la restitution d'énergie par un phénomène d'oxydo-réduction.

L'invention a encore pour objet un système d'affichage électrochromique.

L'invention sera mieux comprise au moyen de la description qui va suivre et des figures annexées parmi lesquelles:

– la figure 1 représente une vue en coupe d'un dispositif d'accumulation et de restitution d'énergie selon l'invention;

– la figure 2 représente la caractéristique de décharge d'un dispositif de stockage d'énergie selon l'invention.

La description va d'abord porter sur le mode d'obtention des conducteurs utilisés par l'invention; elle portera ensuite sur la réalisation de batteries utilisant ces matériaux.

Les polymères seront utilisés sous la forme de films déposés sur un corps conducteur. Les films de polymère selon l'invention sont obtenus à partir de monomères qui possèdent au moins un hétérocycle aromatique à 5 chaînons contenant un seul hétéro-atome. Le monomère peut être un dérivé substitué en position 3, en position 4, ou en position 3 ou 4 du thiophène ou du furanne. Ce peut être un indole substitué sur le noyau phényle par 1 à 4 groupements. Les substitutions peuvent être indifféremment un groupement de type alkyle, alkoxyle, hydroxyle, aryle, aryle substitué, halogène, trihalogénométhyle, cyano, amino, dialkylamino.

La polymérisation du monomère est effectuée dans une cellule d'électrolyse contenant le monomère dissous dans un solvant organique tel que l'acétonitrile, le tétrahydrofuranne, le chlorure de méthylène ou un mélange eau-actétonitrile, en présence d'un sel conducteur de formule $A^+ X^-$. Le cation $A^+$ peut être un élément alcalin, un ion $N^+R_4$, (R étant l'éthyle, le butyle ou un composé analogue). L'anion $X^-$ peut être un ion du type $ClO_4^-$, $BF_4^-$, $PF_6^-$, $Br^-$ ou un aryl sulfonate. A titre d'exemple, les concentrations en monomère peuvent être comprises entre $5.10^{-3}$ et 0,1 mole par litre et celles en sel conducteur entre $10^{-2}$ et 1 mole par litre. Au cours de l'électrolyse, un film de polymère se dépose sur le corps conducteur utilisé comme anode de la cellule d'électrolyse. L'anode peut être métallique, par exemple en or ou en platine. On peut également utiliser un métal tel que le cuivre doré ou platiné pour réduire le coût de fabrication. Après l'électrolyse, on disposera donc d'une électrode anodique constituée par un corps conducteur enrobé par un film de polymère y adhérant.

Le film de polymère qui se forme à la surface de l'anode contient une certaine proportion de l'anion provenant de l'électrolyte et on peut écrire sa formule générale sous la forme $(M^+ X^-y)n$ où M représente le monomère, $X^-$ l'anion ou contre-ion, y la proportion en anion dans le polymère rapportée à une mole de monomère et n le degré de polymérisation. Dans la formule ci-dessus, y est un facteur qui peut varier entre 0,1 et 0,5. Le polymère et l'anion forment un complexe à transfert de charges dont la conductivité varie entre $10^{-2}$ et $100\ \Omega^{-1} \cdot cm^{-1}$.

On peut classer les monomères utilisés dans les dispositifs selon l'invention en deux groupes:

– les hétérocycles substitués par au moins l'un des groupements $R_1$ et $R_2$, de formule générale:

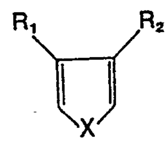

avec

X = S ou O,

c'est-à-dire: le pyrrole, le thiophène ou le furanne substitué,

– les indoles substitués sur le noyau phényle par au moins l'un des groupements $R_3$ à $R_6$, de formule générale:

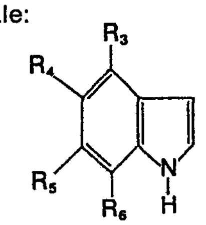

Les substitutions $R_1$ à $R_6$ étant les groupements déjà cités.

Des exemples d'élaboration de polymères dopés du type $(M^+ X^-y)n$ sont donnés ci-après.

Exemple 1:

Cet exemple décrit la fabrication type d'un polymère dopé où le monomère est le méthyl-3-thiophène et le dopant l'ion $ClO_4^-$.

La polymérisation peut s'effectuer dans une cellule d'électrolyse comprenant l'anode, la cathode et éventuellement une électrode de référence, par exemple en calomel. La cellule est remplie d'une solution contenant $10^{-2}$ mole de méthyl-3-thiophène et 0,1 mole de perchlorate de lithium pour 1 litre d'acétonitrile. L'anode est par exemple une lame de platine. La cathode peut se présenter sous la forme d'un film de platine. La solution est désoxygénée par balayage d'argon sec pendant au moins une demi-heure. On fixe le potentiel de l'anode à 1,4 V par rapport à l'électrode de référence. En établissant une différence de potentiel entre l'anode et la cathode, on provoque l'électrolyse de la solution et l'anode se recouvre alors d'un film de polymère de couleur bleu foncé. Le polymère obtenu par cette méthode est le poly méthyl-3-thiophène qui peut être représenté par la formule chimique suivante, déterminée par microanalyse:

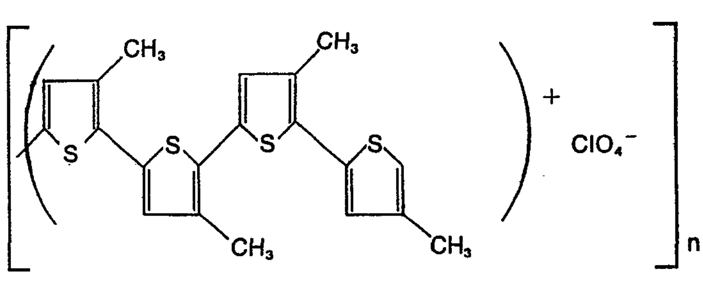

Ce polymère est stable à l'air et sous vide jusqu'à des températures supérieures à 300 °C. Sa conductivité est comprise entre 10 et 100 $\Omega^{-1} \cdot cm^{-1}$.

L'électrode recouverte de son film de polymère est rincée dans l'acétonitrile et est alors prête à servir d'anode dans un dispositif électrochimique de stockage d'énergie.

En changeant d'électrolyte, on peut doper le polymère par d'autres anions. Par exemple, en se servant d'hexafluorophosphate de tétrabutylammonium $N(Bu)_4^+ PF_6^-$ ou de tétrafluoroborate de tétrabutylammonium $N(Bu)_4^+ BF_4^-$, en concentration identique au perchlorate de lithium, on obtient un film de poly méthyl-3-thiophène dopé avec des anions $PF_6^-$ ou $BF_4^-$.

Exemple 2:

Cet exemple décrit la fabrication d'un polymère dopé où le monomère de base est le 5-cyanoindole de formule chimique:

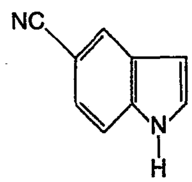

et où le dopant est l'anion $ClO_4^-$.

La synthèse du polymère est effectuée de la même façon que celle du poly méthyl-3-thiophène avec une différence de potentiel de 1,4 V entre l'anode et l'électrode de référence. Les concentrations de monomère et d'électrolyte sont identiques à celles données dans l'exemple 1. L'électrolyte utilisé peut être le perchlorate de lithium.

Les exemples qui précèdent ont permis d'obtenir par oxydation électrochimique des électrodes recouvertes d'un film de polymère dopé par des anions. Durant la décharge des dispositifs électrochimiques de stockage d'énergie utilisant des électrodes organiques, les électrons circulant dans le circuit de décharge vont de l'électrode la moins oxydée (cathode) à l'électrode la plus oxydée (anode) jusqu'à ce que les deux électrodes atteignent le même état d'oxydation. Une électrode recouverte d'un film de polymère dopé par des anions formera donc l'anode d'un dispositif de stockage d'énergie. La cathode d'un tel dispositif peut être une simple électrode métallique ou une électrode recouverte d'un polymère dopé par des cations.

La polymérisation électrochimique du monomère s'effectuant sur l'anode de la cellule d'électrolyse, on ne peut obtenir directement une électrode recouverte d'un polymère dopé par des cations.

On peut, pour obtenir une telle cathode, se servir de l'anode obtenue précédemment et lui faire subir une double réduction. Une première réduction électrochimique est possible juste après la polymérisation en laissant l'anode dans la cellule d'électrolyse et en provoquant la décharge de la cellule. Cette décharge provoque l'extraction des anions logés à l'intérieur du polymère et on obtient un polymère appauvri en anions qui renferme des sites occupables par des cations. On peut ensuite effectuer une seconde réduction soit par voie chimique, soit par voie électrochimique. La voie chimique consiste à tremper le polymère dans une solution contenant les cations désirés. Ces cations occuperont les sites laissés vacants par les anions originaux. Pour obtenir un polymère dopé par les cations $Li^+$, $Na^+$ ou $K^+$, on peut se servir d'une solution de naphtalène lithium, de naphtalène sodium ou de naphtalène potassium dans le tétrahydrofuranne. La voie électrochimique consiste à placer l'électrode désionisée en tant que cathode dans une cellule d'électrolyse contenant en solution les cations désirés. Ceux-ci viennent s'insérer dans les sites laissés vacants par les anions originaux lorsque l'on provoque l'électrolyse de la solution. Les cations peuvent être des ions alcalins tels que le sodium, le potassium, le lithium ou des composés du genre $(Bu)_4 N^+$ ou $(Et)_4 N^+$ issus d'un électrolyte en solution dans un solvant tel que l'acétonitrile ou le tétrahydrofuranne. La concentration d'électrolyte dans la solution peut être comprise entre $10^{-2}$ et 1 mole pour 1 litre de solvant.

On peut noter qu'il est donc possible d'obtenir une électrode recouverte d'un film de polymère désionisé susceptible d'être à nouveau ionisé. On peut alors fabriquer des dispositifs de stockage d'énergie en se servant de ces électrodes comme anode et cathode, leur dopage en anions ou cations s'effectuant lors de la première charge.

Les dispositifs électrochimiques de stockage d'énergie, batteries ou piles, seront donc constitués d'au moins un élément comprenant:

- une anode constituée par une électrode comprenant un film de polymère dopé par des anions,
- une cathode constituée soit par une électrode métallique, soit par une électrode comprenant un film de polymère dopé par des cations,
- un électrolyte constitué par un sel dont la dissociation ionique correspond aux anions et cations précités, en solution dans un solvant qui peut être l'acétonitrile, le tétrahydrofuranne, le carbonate de propylène, le chlorure de méthylène ou un mélange de différents solvants.

Les dispositifs électrochimiques ainsi réalisés auront généralement comme avantage, grâce aux polymères utilisés, de disposer d'un potentiel d'oxydo-réduction plus élevé que les dispositifs connus qui utilisent d'autres polymères.

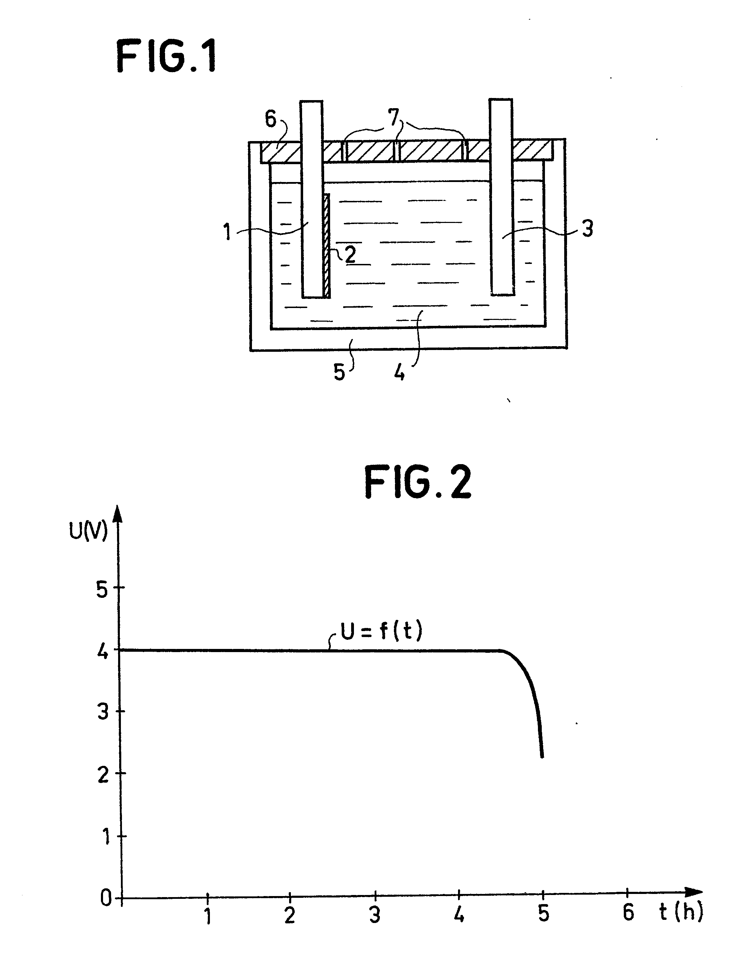

A titre d'exemple non limitatif, on a relevé la caractéristique de décharge d'un dispositif d'accumulation et de restitution d'énergie selon l'invention. Un tel dispositif est représenté à la figure 1 qui est une vue en coupe. Il est constitué d'un seul élément de stockage comprenant:

- une cuve à électrolyse 5 recouverte d'un capot 6 percé par endroits de trous 7 permettant éventuellement de libérer les gaz provoqués par l'électrolyse,
- une anode constituée par un élément conducteur 1 en platine recouvert d'un film 2 de polyméthyl-3-thiophène dopé par des ions perchlorate $ClO_4^-$,

– une cathode constituée par une électrode 3 en lithium ou par une électrode en aluminium recouverte d'une couche de lithium,

– un électrolyte 4 constitué par du perchlorate de lithium en solution dans du tétrahydrofuranne et dont la concentration est de 0,3 mole/litre de solvant.

La figure 2 représente la caractéristique de décharge d'un dispositif tel que celui décrit ci-dessus. La courbe U = f(t) a été relevée en gardant l'intensité du courant de décharge constante et égale à 0,38 mA et pour un film de polymère dopé d'un poids de 25 mg. On peut comparer le dispositif selon l'invention à une batterie selon l'état de la technique. La batterie de type connu disposait en effet d'une cathode en lithium et d'une anode comportant une couche de polyacétylène. Le tableau ci-dessous réunit les caractéristiques essentielles des deux dispositifs en les comparant.

| | anode en polyacétylène | anode en poly méthyl-3-thiophène |
|---|---|---|
| Puissance instantanée | 30 000 W/kg (pour 18 mg) | 40 000 W/kg (pour 10 mg) |
| Puissance délivrée | 176 Wh/kg (pour 3 mg) | 240 Wh/kg (pour 3 mg) |
| Différence de potentiel en circuit ouvert entre anode et cathode | 3,7 V | 4 V |
| nombre de cycles charge/ décharge | >20 | >20 |

Dans ce tableau, les valeurs des puissances sont données en fonction du poids de matériau polymère sur l'anode. La différence de potentiel entre anode et cathode est donnée en début de décharge. On remarque que le dispositif selon l'invention est capable de stocker plus d'énergie par unité de poids que le dispositif de l'art connu et que la puissance délivrée est sensiblement plus élevée. On constate également que, grâce au nouveau polymère, le potentiel d'oxydo-réduction est plus fort qu'en utilisant le polyacétylène, ce qui conduit à disposer entre l'anode et la cathode du dispositif d'une différence de potentiel plus élevée.

Les matériaux polymères dopés par des anions ou des cations possèdent la propriété de modifier leur couleur suivant leur état électrochimique. Lors de la charge ou de la décharge d'un dispositif selon l'invention, les films de polymère déposés sur les électrodes subissent des cycles d'oxydation et de réduction avec modification des spectres optiques. On peut donc se servir d'un tel dispositif comme cellule de visualisation électrochromique. Il convient dans ce cas que le dispositif donne libre accès à un rayon lumineux incident sur l'un des films de polymère en choisissant des matériaux transparents pour fabriquer les éléments situés sur le chemin du faisceau lumineux.

Les cellules électrochimiques selon l'invention permettent donc de réaliser des dispositifs de stockage d'énergie ayant de nombreux avantages par rapport aux systèmes existants: potentiel d'oxydo-réduction plus élevé, grande inertie vis-à-vis des solvants usuels, plus grande stabilité en température, meilleure résistance à l'action de l'oxygène. Elles peuvent être employées comme piles non rechargeables, par exemple dans le cas où la cathode en matériau alcalin se décompose entièrement lors de la décharge. On peut les associer pour former des batteries d'accumulateurs. Il est possible d'utiliser leurs effets électrochrome dans des dispositifs de visualisation associés ou non à leurs propriétés de stockage d'énergie.

**Revendications**

1. Dispositif électrochimique comprenant une cellule (5) contenant un électrolyte (4) en suspension dans un solvant et au moins une première et une seconde électrode en contact avec ledit électrolyte, au moins la première électrode comprenant un film (2) de polymère sur un support conducteur (1), ledit film étant obtenu par polymérisation électrochimique d'au moins un monomère M, ledit polymère répondant à la formule générale $(M^+ X^- y)n$ où $X^-$ représente un anion provenant de l'électrolyte utilisé au cours de ladite polymérisation, y la proportion en anion rapportée à une mole de monomère et n le degré de polymérisation, caractérisé en ce que ledit monomère est:

– soit un hétérocycle substitué par au moins l'un des groupements $R_1$ et $R_2$, de formule générale:

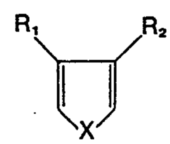

avec

X = S ou O,

$R_1$ et $R_2$ étant des groupements de type alkyle, alkoxyle, hydroxyle, aryle, aryle substitué, halogène, trihalogénométhyle, cyano, amino ou dialkylamino;

– soit un indole substitué sur le noyau phényle par au moins l'un des groupements $R_3$, $R_4$, $R_5$ et $R_6$, de formule générale:

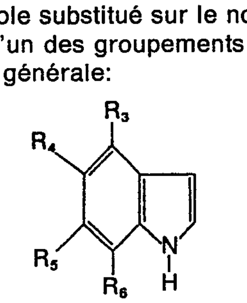

$R_3$, $R_4$, $R_5$ et $R_6$ étant des groupements de type alkyle, alkoxyle, hydroxyle, aryle, aryle substitué, halogène, trihalogénométhyle, cyano, amino ou dialkylamino.

2. Dispositif selon la revendication 1, caractérisé en ce que ledit anion $X^-$ est un ion tel que $ClO_4^-$, $BF_4^-$, $PF_6^-$, $I^-$, $B_r^-$ ou un aryl sulfonate.

3. Dispositif selon l'une des revendications 1 ou 2, caractérisé en ce que ledit support conducteur (1) est en platine.

4. Dispositif selon des revendications 1 ou 2, caractérisé en ce que ledit support conducteur (1) comprend un revêtement de platine.

5. Dispositif selon l'une quelconque des revendications 1 à 4, caractérisé en ce que ladite seconde électrode est métallique.

6. Dispositif selon l'une quelconque des revendications 1 à 5, caractérisé en ce que ladite seconde électrode comprend un métal alcalin.

7. Dispositif selon l'une quelconque des revendications 1 à 4, caractérisé en ce que la seconde électrode supporte également un film de polymère obtenu par polymérisation électrochimique dudit monomère M et où des cations ont été substitués aux anions $X^-$.

8. Dispositif selon la revendication 7, caractérisé en ce que lesdits cations sont des ions alcalins ou des composés du genre $(Bu)_4\ N^+$ ou $(Et)_4\ N^+$.

9. Dispositif selon l'une quelconque des revendications 1 à 8, caractérisé en ce qu'il sert à la restitution d'énergie par un phénomène de réduction électrochimique.

10. Dispositif selon l'une quelconque des revendications 1 à 8, caractérisé en ce qu'il sert à l'accumulation et à la restitution d'énergie par un phénomène d'oxydo-réduction.

11. Dispositif selon la revendication 10, caractérisé en ce que ledit électrolyte (4) est un sel en solution dans un solvant organique tel que l'acétonitrile, le tétrahydrofuranne, le carbonate de propylène, le chlorure de propylène ou un mélange de ces solvants.

12. Dispositif selon la revendication 10, caractérisé en ce que le polymère de ladite première électrode comprend l'anion $X^- = ClO_4^-$, que la seconde électrode (3) comprend du lithium et que ledit électrolyte (4) est du perchlorate de lithium en solution dans du tétrahydrofuranne.

13. Dispositif selon l'une quelconque des revendications 10 à 12, caractérisé en ce que la seconde électrode (3) est constituée d'une couche de lithium déposée sur une plaque d'aluminium.

14. Système d'affichage électrochimique, caractérisé en ce qu'il utilise un dispositif électrochimique selon la revendication 1.

**Claims**

1. An electrochemical device comprising a cell (5) containing an electrolyte (4) suspended in a solvent and at least a first and a second electrode in contact with this electrolyte, at least the first electrode having a polymer film (2) on a conducting support (1), said film being obtained by electrochemical polymerization of at least one monomer M, said polymer complying with the general formula $(M^+X^-y)n$, in which $X^-$ represents an anion obtained from the electrolyte used during the polymerization process, y is the anion proportion related to one mole of monomer and n the degree of polymerization, characterized in that the monomer is:

– either a heterocycle substituted by at least one of the groups $R_1$ and $R_2$, of general formula:

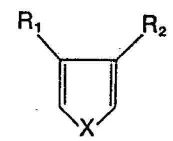

with

$X = S$ or O,

$R_1$ and $R_2$ being groups of the alkyl, alkoxyl, hydroxyl, aryl, substituted aryl, halogen, methyl trihalide, cyano, amino or dialkylamino type,

– or an indole substituted on the phenyl nucleus by at least one of the groups $R_3$, $R_4$, $R_5$, $R_6$, of general formula:

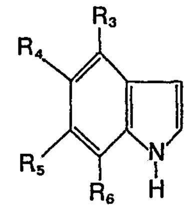

$R_3$, $R_4$, $R_5$ and $R_6$ being groups of the alkyl, alkoxyl, hydroxyl, aryl, substituted aryl, halogen, methyl trihalide, cyano, amino or dialkylamino type.

2. A device according to claim 1, characterized in that the anion $X^-$ is an anion such as $ClO_4^-$, $BF_4^-$, $PF_6^-$, $I^-$, $Br^-$ or an arylsulfonate.

3. A device according to one of claims 1 or 2, characterized in that the conducting support (1) is of platinum.

4. A device according to claims 1 or 2, characterized in that the conductive support (1) comprises a platinum coating.

5. A device according to any one of claims 1 to 4, characterized in that the second electrode is metallic.

6. A device according to any one of claims 1 to 5, characterized in that the second electrode comprises an alkali metal.

7. A device according to any one of claims 1 to 4, characterized in that the second electrode also supports a polymer film obtained by electrochemical polymerization of the monomer M and in which cations have been substituted for the anions $X^-$.

8. A device according to claim 7, characterized in that the cations are alkaline ions or compounds of the type $(Bu)_4N^+$ or $(Et)_4N^+$.

9. A device according to any one of claims 1 to 8, characterized in that said device is used for restoring energy by an electrochemical reduction phenomenon.

10. A device according to any one of claims 1 to 8, characterized in that said device is used for storing and restoring energy by an oxidoreduction phenomenon.

11. A device according to claim 10, characterized in that the electrolyte (4) is a salt dissolved in an organic solvent, such as acetonitrile, tetrahydrofuran, propylene carbonate, propylene chloride, or a mixture of these solvents.

12. A device according to claim 10, characterized in that the polymer of the first electrode comprises the anion $X^- = ClO_4^-$, the second electrode (3) comprises lithium and the electrolyte (4) is lithium perchlorate dissolved in tetrahydrofuran.

13. A device according to any one of claims 10 to 12, characterized in that the second electrode (3) is constituted by a lithium coating, deposited on an aluminium plate.

14. An electrochromic display system, characterized in that it uses an electrochemical device according to claim 1.

**Patentansprüche**

1. Elektrochemische Vorrichtung mit einer Zelle (5), die einen Elektrolyten (4) in Suspension in einem Lösungsmittel sowie mindestens eine erste und eine zweite Elektrode in Kontakt mit diesem Elektrolyten enthält, wobei mindestens die erste Elektrode auf einem leitenden Träger (1) einen Polymerfilm (2) enthält, der durch elektrochemische Polymerisation mindestens eines Monomers M erhalten wurde, wobei dieses Monomer der allgemeinen Formel $(M^+X^-y)n$ entspricht, in der $X^-$ ein aus dem während der Polymerisation verwendeten Elektrolyten stammendes Anion, y den auf ein Mol des Monomers bezogenen Anionenanteil und n den Polymerisationsgrad darstellen, dadurch gekennzeichnet, dass das Monomer

– entweder ein durch mindestens eine der Gruppierungen $R_1$ und $R_2$ substituierter Heterozyklus der allgemeinen Formel

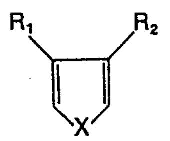

mit X = S oder O,

wobei $R_1$ und $R_2$ Gruppierungen vom Alkyl-, Alkoxyl-, Hydroxyl-, Aryl-, substituierten Aryl-, Halogen-, Trihalogenomethyl-, Cyan-, Amino- oder Dialkylamino-Typ sind,

– oder ein Indol ist, das auf den Phenylkern durch mindestens eine der Gruppierungen $R_3$, $R_4$, $R_5$ und $R_6$ substituiert ist und der allgemeinen Formel entspricht:

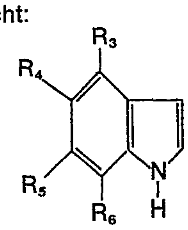

wobei $R_3$, $R_4$, $R_5$ und $R_6$ Gruppierungen vom Alkyl-, Alkoxyl-, Hydroxyl-, Aryl-, substituierten Aryl-, Halogen-, Trihalogenomethyl-, Cyan-, Amino- oder Dialkylamino-Typ sind.

2. Vorrichtung nach Anspruch 1, dadurch gekennzeichnet, dass das Anion $X^-$ ein Anion wie beispielsweise $ClO_4^-$, $BF_4^-$, $PF_6^-$, $I^-$, $B_r^-$ oder ein Arylsulfonat ist.

3. Vorrichtung nach einem der Ansprüche 1 oder 2, dadurch gekennzeichnet, dass der leitende Träger (1) aus Platin ist.

4. Vorrichtung nach den Ansprüchen 1 oder 2, dadurch gekennzeichnet, dass der leitende Träger (1) eine Beschichtung aus Platin aufweist.

5. Vorrichtung nach einem beliebigen der Ansprüche 1 bis 4, dadurch gekennzeichnet, dass die zweite Elektrode eine Metallelektrode ist.

6. Vorrichtung nach einem beliebigen der Ansprüche 1 bis 5, dadurch gekennzeichnet, dass die zweite Elektrode ein Alkalimetall enthält.

7. Vorrichtung nach einem beliebigen der Ansprüche 1 bis 4, dadurch gekennzeichnet, dass die zweite Elektrode ebenfalls einen Polymerfilm trägt, der durch elektrochemische Polymerisation des Polymers M erhalten wurde und bei dem Kationen gegen die Anionen $X^-$ ausgetauscht wurden.

8. Vorrichtung nach Anspruch 7, dadurch gekennzeichnet, dass die Kationen Alkaliionen oder Verbindungen der Art $(Bu)_4N^+$ oder $(Et)_4N^+$ sind.

9. Vorrichtung nach einem beliebigen der Ansprüche 1 bis 8, dadurch gekennzeichnet, dass sie zur Abgabe von Energie aufgrund einer elektrochemischen Reduktionserscheinung dient.

10. Vorrichtung nach einem beliebigen der Ansprüche 1 bis 8, dadurch gekennzeichnet, dass sie zur Speicherung und zur Wiedergabe von Energie aufgrund einer Oxydo-Reduktionserscheinung dient.

11. Vorrichtung nach Anspruch 10, dadurch gekennzeichnet, dass der Elektrolyt (4) ein in einem organischen Lösungsmittel wie Acetonitril, Tetrahydrofuran, Propylencarbonat, Propylenchlorid oder einer Mischung dieser Lösungsmittel gelöst vorliegendes Salz ist.

12. Vorrichtung nach Anspruch 10, dadurch gekennzeichnet, dass das Polymer der ersten Elektrode das Anion $X^- = ClO_4^-$ enthält, dass die zweite Elektrode (3) Lithium enthält und dass der Elektrolyt (4) Lithiumperchlorat in Lösung in Tetrahydrofuran ist.

13. Vorrichtung nach einem beliebigen der Ansprüche 10 bis 12, dadurch gekennzeichnet, dass die zweite Elektrode (3) aus einer auf eine Aluminiumplatte aufgebrachten Lithiumschicht besteht.

14. Elektrochrom-Anzeigesystem, dadurch gekennzeichnet, dass es eine elektrochemische Vorrichtung nach Anspruch 1 verwendet.

FIG.1

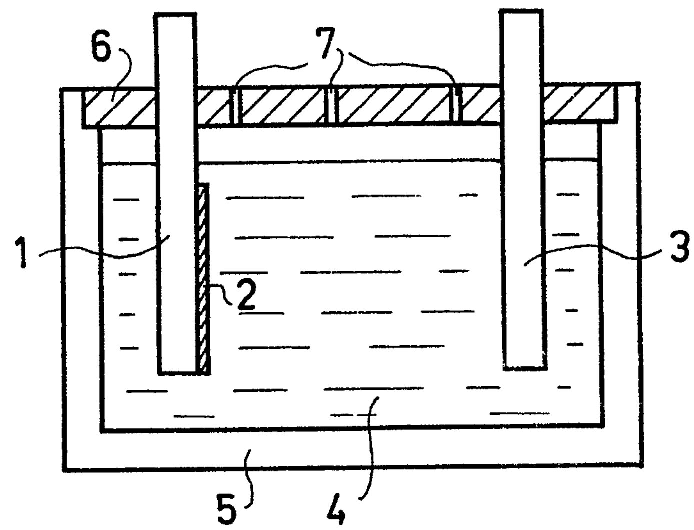


FIG.2